# FASCICULE DE BREVET EUROPEEN

(11) **EP 1 603 296 B1**
(45) Date de publication et mention de la délivrance du brevet: **27.01.2021**
(21) Numéro de dépôt: 05300445.3
(22) Date de dépôt: 02.06.2005
(51) Int. Cl.: H04L 27/26

(54) **Procédé de configuration automatique d'un dispositif tête de réseau**
Verfahren zur automatischen Konfiguration einer Kopfnetzeinrichtung
Method for automated configuring of a headend network device

(30) Priorité: 03.06.2004 FR 0451102
(43) Date de publication de la demande: 07.12.2005
(73) Titulaire: SAGEMCOM BROADBAND SAS, 92500 Rueil-Malmaison (FR)
(72) Inventeur: Samy, Roger, 78457 Vélizy Cedex (FR); Renaldo, Michel, 78457 Vélizy Cedex (FR)
(74) Mandataire: Cabinet Camus Lebkiri

(56) Documents cités:
- EP-A- 1 265 393
- EP-A- 1 351 408
- EP-A- 1 388 954
- US-A- 5 852 655
- US-A1- 2003 039 317
- US-A1- 2004 052 308
- US-B1- 6 570 913
- AGHAJERI S ET AL: "Synchronization in OFDM powerline communication systems in presence of narrowband interferences" ISSPA 2003. SEVENTH INTERNATIONAL SYMPOSIUM ON SIGNAL PROCESSING AND ITS APPLICATIONS, vol. 2, 1 juillet 2003 (2003-07-01), pages 359-362, XP010653376 PISCATAWAY, NJ, USA

## Description

### Domaine technique de l'invention

La présente invention a pour objet un procédé de configuration automatique d'un dispositif tête de réseau. Le domaine de l'invention est celui du raccordement des particuliers à un réseau télématique à haut débit. Un haut débit est à l'heure actuelle au moins égale à 512 Kbits par seconde. Plus particulièrement le domaine de l'invention est celui des réseaux mettant en œuvre des technologies MCM (Multi Carrier Modulation, pour modulation multi-porteuses). Parmi ces technologies on trouve l'OFDM/DMT (Orthogonal Frequency Division Multiplex / Discret MultiTone, pour multiplexage par fréquence orthogonale / tonalités multiples discrètes), le MC-CDMA (Multi Carrier Code Division Multiple Access, pour multiplexage par code sur porteuses multiples), le VDSL (Very high bit rate Digital Suscriber Line, pour ligne numérique à très haut débit), la norme 802.11, et la liste n'est pas exhaustive.

Un but de l'invention est de permettre le raccordement du plus grand nombre de personnes à un réseau télématique haut débit.

Un autre but de l'invention est d'optimiser les débits des réseaux télématiques haut débit utilisant des technologies MCM.

Un autre but de l'invention est de rendre les dispositifs de tête de réseau autonome vis à vis de leur localisation géographique.

### Arrière-plan technologique de l'invention

Dans l'état de la technique se pose le problème de raccorder certaines parties d'une population à un réseau télématique haut débit. Les parties de population concernées sont celles qui sont isolées, non raccordées à un réseau téléphonique commuté, et ou trop éloignées d'équipement terminaux d'un tel réseau téléphonique commuté. Une bonne solution pour ce raccordement semble être l'utilisation des réseaux de distribution déjà existant et desservant l'ensemble des populations isolées. Cette desserte exhaustive assure la pertinence du choix de ce réseau de distribution. Un tel réseau est le réseau de distribution d'énergie électrique. Les technologies employées sur ce réseau sont les technologies dites PLT / PLC (Power Line Transmission / Power Line Communication, pour CPL c'est-à-dire Courant Porteur en Ligne) Le document US6570913 décrit un mode de réalisation d'une communication sur un réseau électrique. Une tête de réseau détermine un ensemble de bandes bruyantes dans les bandes de fréquences attribuées afin de déterminer l'ensemble de bandes de fréquences libres pour la transmission en amont.

Ce réseau présente cependant d'autres inconvénients liés au fait qu'il n'a jamais été prévu pour la transmission de données. Ce réseau présente donc une haute sensibilité aux bruits et est lui même fortement rayonnant lorsqu'il est utilisé pour la transmission de données.

L'utilisation de ce réseau requiert donc a mise en œuvre de technologies de codages robustes. Parmi ces technologies se trouve notamment les technologies MCM précédemment cités. Leur utilisation permet donc de garantir une bonne transmission des informations. Cependant il subsiste le problème du rayonnement. La mise en œuvre de ces technologies perturbe en effet tout l'environnement électromagnétique.

Dans l'invention ce problème est résolu en protégeant des fréquences prédéterminées. Ces fréquences à protéger sont déterminées par une analyse de l'environnement électromagnétique de la tête de réseau. Au cours de cette analyse la tête de réseau détermine à quelles fréquences des signaux sont présents, il en résulte une liste de fréquences occupées. La tête de réseau compare alors cette liste à une base de données des fréquences à protéger. Si une fréquence est présente à la fois dans la liste des fréquences occupées et dans la base de données, alors cette fréquence ne sera pas utilisée par la tête de réseau. Dans la base de données, les fréquences sont associées à une localisation géographique. Les fréquences à protéger varient donc en fonction de la localisation géographique de la tête de réseau. Lorsque la tête de réseau interroge la base de données, la tête de réseau lui communique donc sa localisation géographique. Le résultat de la comparaison de la liste des fréquences occupées et de la base de données est une carte de fréquences interdites. Cette carte est une liste de fréquences que la tête de réseau ne doit pas occuper.

L'invention a donc pour objet un procédé de configuration automatique d'un dispositif tête de réseau d'un réseau télématique caractérisé en ce que le procédé comporte:
- une étape dans laquelle le dispositif tête de réseau écoute son environnement électromagnétique dans une bande de fréquences prédéterminée et correspondant à une bande de fréquences d'émission réception du dispositif tête de réseau, lors de cette écoute le dispositif de tête de réseau mesure le bruit pour les fréquences de ladite bande.
- une étape d'interrogation d'une base de données par la tête de réseau, ladite base de données comportant des informations relatives à l'attribution de plage de fréquences par des organismes compétents à des activités d'émission radiofréquence, chacune de ces plages de fréquences étant associée à une localisation géographique,
- une étape de production d'une carte des fréquences bruitées et attribuées.

Avantageusement l'invention est aussi caractérisée en ce que la carte des fréquences bruitées et attribuées est transmise aux éléments du réseau télématique gérés par la tête de réseau.

Avantageusement l'invention est aussi caractérisée en ce que la mesure de bruit est faite en sortie de l'égaliseur de fréquences.

Avantageusement l'invention est aussi caractérisée en ce que les étapes de configuration automatiques sont mises en œuvres au démarrage du dispositif tête de réseau.

Avantageusement l'invention est aussi caractérisée en ce que les étapes de configuration automatiques sont mises en œuvres lors d'une détection, par le dispositif tête de réseau, d'une diminution du débit de communication entre lui et les éléments du réseau télématique qu'il gère.

Avantageusement l'invention est aussi caractérisée en ce que les étapes de configuration automatiques sont mises en œuvres à intervalles réguliers.

Avantageusement l'invention est aussi caractérisée en ce que la bande de fréquence prédéterminée s'étend de 1MHz à 30MHz.

L'invention sera mieux comprise à la lecture de la description qui suit et à l'examen des figures qui l'accompagnent. Les figures montrent:

### Brève description des figures

- Figure 1: une illustration de moyens mettant en œuvre le procédé selon l'invention.
- Figure 2: une illustration d'étapes du procédé selon l'invention.

### Description des formes de réalisation préférées de l'invention

Dans la description, lorsque l'on prête une action à un appareil, celle-ci est réalisée par un microprocesseur de cet appareil commandé par des codes instructions enregistrés dans une mémoire de l'appareil. Cela est aussi équivalent à l'exécution de l'action par un microprocesseur spécialisé de type DSP ou ASIC.

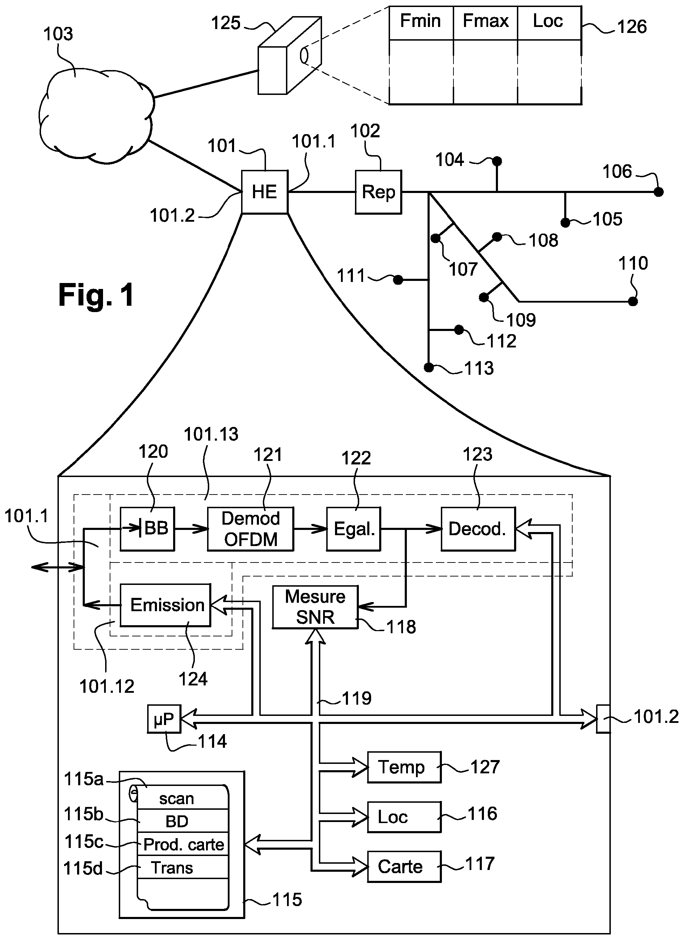

La figure 1 montre un dispositif 101 tête de réseau connecté par une interface 101.1 à un répéteur 102, et par une interface 101.2 à un réseau 103 télématique. Dans un exemple préféré, le réseau 103 est le réseau Internet. Le répéteur 102 est d'autre part connecté à des éléments terminaux de type modem utilisateur. Ces éléments terminaux sont installés chez les utilisateurs finaux du service. La figure 1 montre des éléments terminaux 104 à 113 connectés au répéteur 102. Dans la pratique les éléments 104 à 113 peuvent être connecté directement au dispositif 101 sans l'intermédiaire d'un répéteur. La mise en œuvre d'un répéteur dépend de la distance existant entre le dispositif 101 et les éléments 104 à 113.

Dans notre exemple, les éléments 101, 102, et 103 à 113 sont connectés sur le réseau de distribution d'énergie. Le dispositif 101 est connecté au niveau d'un transformateur, les éléments 104 à 113 sont connectés à une prise électrique chez les abonnés à la fois au service de distribution d'énergie, et à un service d'accès à un réseau télématique. Le répéteur 102, si besoin, est connecté entre le dispositif 101 et les éléments 104 à 113. Dans cette configuration les éléments 101, 102, et 104 à 113 forme un réseau télématique secondaire qui étend le réseau 103. Les transmissions sur ce réseau télématique secondaire sont réalisées par des technologies MCM point à multipoint déjà citées. Ces transmissions utilisent des signaux électriques dont les fréquences sont dans la bande de 1 MHz à 30 MHz. Cette bande de fréquences prédéterminée est fixée par les réglementations en vigueur dans les différents états où sont mises en œuvre les technologies MCM.

La figure 1 montre aussi certains détails du dispositif 101. Ce dispositif 101 comporte, comme déjà dit, une interface 101.1 de connexion avec le réseau télématique secondaire, et une interface 101.2 de connexion avec le réseau 103 Internet. Le dispositif 101 comporte aussi un microprocesseur 114, une mémoire 115 de programme, une mémoire 116 de localisation, et une mémoire 117 de carte de fréquences.

La mémoire 115 comporte plusieurs zones correspondant chacune à des codes instructions permettant la réalisation de fonctions du dispositif 115. La mémoire 115 comporte une zone 115a correspondant à l'écoute de l'environnement électromagnétique, une zone 115b correspondant à l'interrogation d'une base de données, une zone 115c correspondant à la production d'une carte de fréquences, et une zone 115d correspondant à l'émission d'une carte de fréquences. La mémoire 115 comporte évidemment d'autres zones, seules celles directement liées à l'invention étant représentées.

Le dispositif 101 comporte aussi un circuit 118 de mesure du bruit sur le réseau télématique secondaire.

Les éléments 101.1, 101.2, et 114 à 118 sont connectés via un bus 119.

L'interface 101.1 assure la conversion électromagnétique des signaux entre le réseau télématique secondaire et le bus 119. L'architecture d'une telle interface étant connue, on en rappelle ici quelques éléments pour une meilleur compréhension de l'invention. L'interface 101.1 comporte donc principalement 2 chaîne de traitement de signaux, une chaîne 101.12 pour l'émission, et une chaîne 101.13 pour la réception. En particulier la chaîne 101.13 comporte un étage 120 de transposition des signaux reçus par le dispositif 101 via son interface 101.1 en bande de base, un étage 121 de démodulation OFDM, un étage 122 d'égalisation de canal, et un étage 123 de décodage de canal. L'étage 120 est aussi connecté au réseau télématique secondaire, l'étage 123 étant lui connecté au bus 119. L'invention utilise la sortie de l'étage 122 d'égalisation pour effectuer une mesure de bruit. Cette sortie correspond dans la pratique à une transformée de Fourier des signaux électromagnétiques reçus par le dispositif 101 via le réseau télématique secondaire. Les circuits 118 permettent donc de mettre à la disposition du microprocesseur 114 la sortie de l'étage 122 d'égalisation. Les circuit 118 sont donc une mémoire enregistrant la sortie de l'étage 122.

La chaîne 101.12 comporte des circuits 124 permettant l'émission sur le réseau télématique secondaire de données produites par le dispositif 101.
La figure 1 montre encore, connecté au réseau 103, un serveur 125 comportant une base 126 de données. La base 126 de données comporte une liste de plage de fréquences, chacune de ces plages étant associées à une zone géographique. Une plage de fréquence est définit par une fréquence minimale et une fréquence maximale. Une zone géographique est, par exemple, une latitude, longitude, et un rayon de zone définissant l'extension de la zone géographique dans laquelle la plage de fréquences est protégée. Le contenu de la base 126 de données correspond aux différentes législations en vigueurs dans les différents états de la planète. Les plages de fréquences décrites dans la base 126 de données sont des plages de fréquence attribuées à des services spécifiques. Un service spécifique est, par exemple, le service des radioamateurs. Il n'est pas toléré de perturber ces services spécifiques. Ces plages de fréquences sont dites protégées.

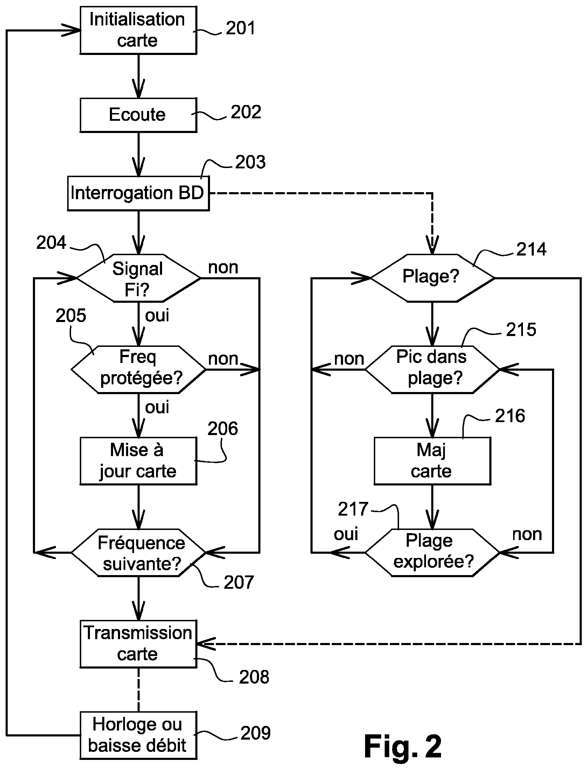

La figure 2 illustre des étapes du procédé selon l'invention mis en œuvre par le dispositif 101. La figure 2 montre une étape 201 préliminaire dans laquelle le dispositif 201 initialise la carte des fréquences interdites. Dans cette étape le dispositif 101 efface le contenu de la mémoire 201.

De l'étape 201 on passe à une étape 202 d'écoute de l'environnement électromagnétique. Dans cette étape les circuits 118 enregistrent la sortie de l'étage 122 d'égalisation. Cette étape est réalisée à un moment ou les équipements gérés par le dispositif 101 sont silencieux, c'est à dire qu'ils n'émettent pas de signal. Ces équipements sont ceux connectés sur le réseau télématique secondaire, c'est-à-dire dans notre exemple les élément 102 et 104 à 113. Comme déjà suggéré, le résultat de cette étape est une liste de pics résultant d'une transformé de Fourier, chaque pic correspondant à une fréquence, l'importance du pic étant proportionnel à la puissance de signal présent à cette fréquence. Dans la mesure ou les équipements gérés par le dispositif 101 sont silencieux, ces pics sont du bruit du point de vu du dispositif 101. On ne considère que les pics correspondant à des fréquences comprises dans la bande prédéterminée allant de 1 MHz à 30 MHz.

De l'étape 201 on passe à une étape 203 d'interrogation de la base 126 de données par le dispositif 101. Le dispositif 101 envoie, via le réseau 103, une trame d'interrogation au serveur 125. Cette trame d'interrogation comporte la localisation du dispositif 101. Cette localisation est en fait le contenu de la mémoire 116. Cette mémoire 116 comporte la position géographique du dispositif 101. Cette position est exprimée, par exemple, en latitude et longitude. Le contenu de la mémoire 116 est mis à jour à l'installation du dispositif 101. Le serveur 125 utilise la localisation que comporte la trame d'interrogation pour extraire de la base 126 de données les informations pertinentes et les émettre en réponse à la trame d'interrogation. Les informations pertinentes sont déterminées en fonction de la localisation contenue dans la trame d'interrogation qui est à ce stade considéré comme le centre C d'une zone Z. La zone Z est, dans une variante préférée, un cercle de centre C et de rayon un kilomètre. Le rayon est dans les faits fonction de la puissance émise en régime établi par le dispositif 101 et les éléments connectés au réseau télématique secondaire, et donc fonction de la puissance rayonnée par les câbles du réseau de distribution d'énergie.

Le serveur 125 parcourt ainsi la base 126 de données à la recherche de toutes les localisations de cette base interceptant la zone Z précédemment définie. A chacune des localisations ainsi trouvée correspond une plage de fréquences qui est incluse dans une trame de réponse qui sera envoyée en réponse à la trame d'interrogation.

A la fin de l'étape 203, le dispositif 101 reçoit du serveur 125 une liste de plages de fréquence devant être protégées. Le dispositif 101 enregistre cette liste dans une mémoire 127 temporaire. On passe alors à une étape 204 de parcourt de la mémoire 118 dans laquelle le dispositif 101 recherche des pics de signaux. Pour cette recherche le dispositif 101 parcourt en séquence le contenu de la mémoire 118. En séquence signifie de manière ordonné, par exemple dans l'ordre des fréquences croissantes. S'il trouve un pic, c'est à dire une valeur supérieure à un seuil prédéterminé on passe à une étape 205 de détermination de la nature de la fréquence Fc correspondant au pic ainsi trouvée. S'il ne trouve pas de pic, alors on passe à une étape 207 d'évaluation d'une condition de fin d'analyse du contenu de la mémoire 118.

Dans l'étape 205 le dispositif 101 parcourt le contenu de la mémoire 127 à la recherche d'une plage de fréquence susceptible de comporter la fréquence Fc pour laquelle un pic a été trouvé à l'étape 204. Si le dispositif trouve dans la mémoire 127 une plage comportant la fréquence Fc, alors on passe à une étape 206 de mise à jour de la carte des fréquences interdites, sinon on passe à l'étape 207.

Dans l'étape 206 le dispositif 101 insère la fréquence Fc dans la mémoire 117. On rappelle qu'à la fin de l'analyse la mémoire 117 contient une liste de fréquences interdites. Dans l'invention, une fréquence est interdite si elle est comprise dans une plage de la mémoire 127, et si une puissance suffisante à été mesurée pour cette fréquence à l'étape 202.

Dans une variante de l'invention, la mémoire 117 comporte une liste non plus de fréquences, mais de plages de fréquences. Dans cette variante, dans l'étape 206, le dispositif 101 enregistre dans la mémoire 117 non plus la fréquence Fc, mais la plage de fréquence de la mémoire 127 à laquelle appartient la fréquence Fc.

De l'étape 206 on passe à l'étape 207.

Dans l'étape 207, le dispositif 101 incrémente la fréquence Fc d'une unité. C'est à dire que le dispositif 101 passe à la fréquence suivant la fréquence Fc dans son parcours en séquence de la mémoire 118. Si cet incrémentation amène la valeur de la fréquence courante au delà de la valeur supérieure de la bande de fréquence prédéterminée, 30 MHz dans notre exemple, alors on passe à une étape 208 de transmission de la carte des fréquences interdites, sinon on passe à l'étape 204.

Dans l'étape 208 le dispositif 101 construit les canaux de transmission avec les éléments du réseau télématique secondaire et transmet à ces éléments la carte enregistrée dans la mémoire 117 et issue des étapes 201 à 207. Les éléments télématiques secondaire sont aussi appelé les esclaves du dispositif 101 qui est luis considéré comme le maître. Lors de la construction des canaux de communication, le dispositif n'utilise pas les fréquences, ou plages de fréquences, listées dans la mémoire 117. Ainsi l'ensemble des éléments du réseau secondaire, y compris le dispositif 101, ont connaissance des fréquences interdites et ne les utilisent pas. Ce faisant le dispositif 101 maximise le nombre de fréquences utilisables sans perturber les services utilisant des fréquences allouées par une administration d'un état à ces services. Le fait de disposer du plus grand nombre de fréquence possible permet au passage, avec les technologie MCM, de garantir la bande passante la plus élevée possible, et donc de maximiser le débit.

La liste des fréquences interdites à un instant T de mise en œuvre des étapes 201 à 207 pour la position donnée du dispositif 101 est donc transmises par le maître, le dispositif tête de réseau, aux esclaves que sont les répéteurs et modems clients(CPE). Ces esclaves interdisent alors ces mêmes fréquences dans leurs transmissions respectives entre eux et avec ce dispositif tête de réseau. La liste des fréquences interdites est donc contraignantes pour l'ensemble des éléments du réseau télématique secondaire.

Le contenu de la mémoire 117 évolue dans le temps. En effet, l'étape 208 est suivie d'autre étapes d'administration et de communication propres aux protocoles utilisés avec les technologies MCM. Au cours de ces étapes le dispositif 101 mesure le débit des communications. Si le débit venait à chuter sensiblement, de plus de 20% par exemple, alors le dispositif 101 effectue un redémarrage dit à chaud. Dans ce cas, le dispositif 101 impose le silence à tous les éléments du réseau télématique secondaire, et reprend le procédé selon l'invention à l'étape 201. Un redémarrage à chaud intervient aussi lorsque qu'un nouvelle élément apparaît sur le réseau télématique secondaire, c'est-à-dire lorsqu'un tel élément est mis sous tension par exemple.

Dans l'invention, en régime établi, la carte 117 est remise à jour et retransmise de manière transparente pour l'utilisateur. Ces mises à jour ont lieu à intervalle prédéterminé. Dans ce cas de figure, le test de l'étape 204 n'est plus un niveau de signal devant être supérieur à un seuil, mais un rapport signal sur bruit devant être inférieur à un seuil. En effet, en régime établi, les éléments du réseau télématique secondaire ne sont pas silencieux. Dans la pratique cela est identique car lorsque les éléments du réseau télématique secondaire sont silencieux, il n'y a pas de signal, le rapport signal sur bruit est donc minimal. L'intervalle de mise à jour est soit fixe, par exemple 1 fois par seconde, soit correspond à un événement dans l'administration des connexions entre le dispositif 101 et les éléments du réseau télématique secondaire, comme par exemple la fréquence de mise à jour des coefficients d'égalisation de l'étage 122 égaliseur.

Dans une variante de l'invention, le dispositif 101 parcourt en séquence les plages de fréquences décrites dans la mémoire 127 et, pour chacune des ces plages, il recherche des pics dans la mémoire 118.

Dans cette variante l'étape 203 est suivie d'une étape 214 dans laquelle le dispositif 101 détermine s'il reste dans la mémoire 127 une plage de fréquences inexplorée. Si c'est le cas on passe à une étape 215 pour traiter cette plage de fréquences, sinon on passe à l'étape 208.

Dans l'étape 215, le dispositif 101 explore la partie de la mémoire 118 correspondant à la plage de fréquences issue de l'étape 214. Le dispositif 101 recherche en séquence dans la mémoire 118, pour ladite plage de fréquences des pics dont le niveau est supérieur à un seuil. Si un tel pic est trouvé, on passe à une étape 216 de mise à jour de la carte des fréquences interdites. Sinon, on passe à une étape 217 d'évaluation d'un critère de fin d'exploration de la plage. L'étape 216 est identique à l'étape 206.

Le critère de fin d'exploration de la plage est réalisé dès que la valeur de la fréquence courante, celle pour laquelle le dispositif 101 lit la mémoire 118, est supérieure à la borne supérieur de la plage de fréquences déterminée à l'étape 214.

Dans une autre variante de l'invention le contenu de la mémoire 127 est directement transféré dans la mémoire 117. On a donc plus besoin des étapes 202 et 204 à 207.

Dans une autre variante de l'invention, les zones géographiques de la base 126 de données sont décrites par une liste de sommets, cela permet de définir ces zones géographiques comme des polygones.

## Revendications

1. Procédé de configuration automatique d'un dispositif (101) tête de réseau d'un réseau télématique, le dispositif tête de réseau étant connecté à un réseau de distribution d'énergie et ledit réseau utilisant une modulation multi-porteuse, le procédé comportant :
- une étape (202) dans laquelle le dispositif tête de réseau écoute son environnement électromagnétique dans une bande de fréquences prédéterminée et correspondant à une bande de fréquences d'émission et réception du dispositif tête de réseau, lors de cette écoute le dispositif de tête de réseau mesure le bruit pour les fréquences de ladite bande ;
le procédé étant **caractérisé en ce qu'**il comporte :
- une étape (203) d'interrogation d'une base de données par la tête de réseau, ladite base de données comportant des informations relatives à l'attribution de plages de fréquences par des organismes compétents à des services spécifiques d'émission radiofréquence, chacune de ces plages de fréquences étant associée à une localisation géographique,
- une étape (204-207) de production d'une carte des fréquences interdites que le dispositif tête de réseau ne doit pas occuper et qui sont celles bruitées et à la fois attribuées selon la position géographique du dispositif tête de réseau, et où la carte des fréquences interdites étant mise à jour à un intervalle prédéterminé.

2. Procédé selon la revendication 1, **caractérisé en ce que** la carte des fréquences bruitées et attribuées est transmise (208) aux éléments du réseau télématique gérés par la tête de réseau.

3. Procédé selon l'une des revendications 1 ou 2, **caractérisé en ce que** la mesure de bruit est faite en sortie d'un égaliseur de fréquences.

4. Procédé selon l'une des revendications 1 à 3, **caractérisé en ce que** les étapes de configuration automatiques sont mises en oeuvres au démarrage du dispositif tête de réseau.

5. Procédé selon l'une des revendications 1 à 4, **caractérisé en ce que** les étapes de configuration automatiques sont mises en œuvres lors d'une détection, par le dispositif tête de réseau, d'une diminution du débit de communication entre lui et les éléments du réseau télématique qu'il gère.

6. Procédé selon l'une de revendications 1 à 5, **caractérisé en ce que** la bande de fréquence prédéterminée s'étend de 1 MHz à 30MHz.

## Patentansprüche

1. Automatisches Konfigurationsverfahren eines Kopfstellengerät (101) eines telematischen Netzes, wobei das Kopfstellengerät an ein Energieverteilungs-Netz angeschlossen ist und das genannte Netz eine Mehrträgermodulation verwendet, wobei das Verfahren umfasst:
- einen Schritt (202), bei dem das Kopfstellengerät ihre elektromagnetische Umgebung in einem vorbestimmten Frequenzband und entsprechend einem Sende- und Empfangfrequenzband des Kopfstellengerät abhört bei diesem Abhören misst das Kopfstellengerät das Geräusch für die Frequenzen des genannten Bandes;
wobei das Verfahren **dadurch gekennzeichnet ist, dass** es umfasst:
- einen Abfrageschritt (203) einer Datenbank durch die Kopfstelle, wobei die genannte Datenbank Informationen bezüglich der Zuordnung von Frequenzbereichen durch zuständige Stellen zu spezifischen Funkfrequenz-Sendediensten umfasst, wobei jeder dieser Frequenzbereiche einem geographischen Standort zugeordnet ist,
- einen Produktionsschritt (204 - 207) einer Karte der verbotenen Frequenzen, die das Kopfstellengerät nicht belegen darf und die diejenigen sind, die Störgeräusche aufweisen und gleichzeitig gemäß der geographischen Position des Kopfstellengerät zugeordnet sind und wo die Karte der verbotenen Frequenzen in einem vorbestimmten Intervall aktualisiert wird.

2. Verfahren gemäß Anspruch 1, **dadurch gekennzeichnet, dass** die Karte der Frequenzen, die Störgeräusche aufweisen und zugeordnet sind, auf die Elemente des telematischen Netzes übertragen wird (208), die von dem Kopfstellengerät verwaltet werden.

3. Verfahren gemäß einem der Ansprüche 1 oder 2, **dadurch gekennzeichnet, dass** die Geräuschmessung am Ausgang eines Frequenzentzerrers erfolgt.

4. Verfahren gemäß einem der Ansprüche 1 bis 3, **dadurch gekennzeichnet, dass** die automatischen Konfigurationsschritte beim Einschalten des Kopfstellengerät umgesetzt werden.

5. Verfahren gemäß einem der Ansprüche 1 bis 4, **dadurch gekennzeichnet, dass** die automatischen Konfigurationsschritte bei einer Erkennung einer Abnahme des Kommunikationsdurchsatzes durch das Kopfstellengerät zwischen ihr und den Elementen des telematischen Netzes, das sie verwaltet, umgesetzt werden.

6. Verfahren gemäß einem der Ansprüche 1 bis 5, **dadurch gekennzeichnet, dass** das vorbestimmte Frequenzband sich von 1 MHz bis 30 MHz erstreckt.

## Claims

1. Method for automatically configuring a head-end network device (101) of a telematic network, the head-end network device being connected to a power distribution network and said network using a multi-carrier modulation, the method comprising:
- a step (202) wherein the head-end network device listens to its electromagnetic environment in a frequency band predetermined and corresponding to a receiving-transmitting frequency band of the head-end network device, during this listening the head-end network device measures the noise for the frequencies of said band;
the method being **characterised in that** it comprises:
- a step (203) of querying a database by the network head-end, said database comprising information concerning the allocation of frequency ranges by competent agencies to specific radiofrequency transmission services, with each one of these frequency ranges being associated with a geographical location,
- a step (204-207) of producing a map of the prohibited frequencies that the head-end network device must not occupy and which are those that are noisy and both allocated according to the geographical position of the head-end network device, and where the map of the prohibited frequencies is updated at a predetermined interval.

2. Method according to claim 1, **characterised in that** the map of the noisy and allocated frequencies is transmitted (208) to the elements of the telematic network managed by the network head-end.

3. Method according to one of claims 1 or 2, **characterised in that** the measurement of the noise is done at the output of a frequency equalizer.

4. Method according to one of claims 1 to 3, **characterised in that** the steps of automatic configuration are implemented at the starting of the head-end network device.

5. Method according to one of claims 1 to 4, **characterised in that** the steps of automatic configuration are implemented during a detection, by the head-end network device, of a decrease in the communication flowrate between it and the elements of the telematic network that it manages.

6. Method according to one of claims 1 to 5, **characterised in that** the predetermined frequency band extends from 1 MHz to 30MHz.
